# EUROPÄISCHE PATENTSCHRIFT

(11) **EP 3 592 508 B1**
(45) Veröffentlichungstag und Bekanntmachung des Hinweises auf die Patenterteilung: **17.02.2021**
(21) Anmeldenummer: 18709349.7
(22) Anmeldetag: 06.03.2018
(51) Int. Cl.: B25J 9/10

(54) **ROBOTERARM MIT EINER MECHANISCHEN ANSCHLAGSVORRICHTUNG**
ROBOT ARM HAVING A MECHANICAL STOP DEVICE
BRAS ROBOTISÉ POURVU D'UN DISPOSITIF DE BUTÉE MÉCANIQUE

(30) Priorität: 07.03.2017 DE 102017203741
(43) Veröffentlichungstag der Anmeldung: 15.01.2020
(73) Patentinhaber: KUKA Deutschland GmbH, 86165 Augsburg (DE)
(72) Erfinder: EISENWINTER, Leander, 86647 Buttenwiesen / Lauterbach (DE)
(74) Vertreter: Tillmann, Axel
(86) Internationale Anmeldenummer: PCT/EP2018/055489
(87) Internationale Veröffentlichungsnummer: WO 2018/162492

(56) Entgegenhaltungen:
- EP-A1- 0 241 556
- EP-A1- 2 479 009
- DE-A1- 4 203 663
- DE-T2- 60 317 335
- JP-A- S 614 682

## Beschreibung

Die Erfindung betrifft einen Roboterarm, aufweisend mehrere Glieder und mehrere, die Glieder gegeneinander verstellbar verbindende Gelenke, von denen wenigstens eines der Gelenke als ein Drehgelenk ausgebildet ist, das ein dem Drehgelenk zugeordnetes, unmittelbar vorgelagertes Glied der Glieder mit einem dem Drehgelenk zugeordneten, unmittelbar nachgelagerten zweiten Glied der Glieder gegeneinander verschwenkbar verbindet, wobei das Drehgelenk mittels eines Motors des Roboterarms automatisch verstellbar und in seinem maximalen Schwenkwinkel durch eine mechanische Anschlagsvorrichtung des Roboterarms begrenzt ist.

Die EP 2 479 009 B1 beschreibt eine Schwenkvorrichtung, umfassend eine Hülse, ein Drehelement, das dazu eingerichtet ist, sich relativ zu der Hülse zu drehen, und einen Anschlag, der dazu eingerichtet ist, einen Schwenkbereich des Drehelements gegenüber der Hülse zu begrenzen, wobei an der Hülse eine Vielzahl von Nuten ausgebildet ist, die sich in einer axialen Richtung des Drehelements erstrecken, wobei die Vielzahl von Nuten entlang eines Kreisbogens ausgebildet ist, der einen Mittelpunkt aufweist, der koaxial mit einer Achse des Drehelements ist, und wobei ein Abschnitt des Anschlags in eine der Nuten eingefügt ist, wobei an jedem Vorsprung, der zwei benachbarte Nuten definiert, ein erstes Bolzenloch ausgebildet ist, durch das ein Bolzen zum Befestigen der Hülse hindurchragt, und wobei der Anschlag durch die Bolzen befestigt ist.

Die DE 42 03 663 A1 offenbart einen Industrieroboter mit einem Ständer, der drehbar in einem Sockel gelagert ist und mit einer mechanischen Stoppanschlagvorrichtung zur Begrenzung der Drehbewegung des Ständers versehen ist. Die Stoppanschlagvorrichtung enthält mindestens einen radial vorstehenden Stoppanschlagarm, der in einer bestimmten Drehposition mit einem Stoppanschlagstift in Kontakt kommt, der am Sockel befestigt ist. Der Ständer ist mit einer Vielzahl von Ausnehmungen versehen, die längs des Umfanges des Ständers angeordnet sind, wobei der Stoppanschlagarm mindestens einen Befestigungsvorsprung hat, der den Ausnehmungen angepasst ist und der mit Hilfe eines Keils in einer der Ausnehmungen an einer optimalen Stelle am Umfang des Ständers befestigt werden kann.

Aufgabe der Erfindung ist es, einen Roboterarm mit einer Anschlagsvorrichtung zu schaffen, bei der ein Gegenanschlagskörper der Anschlagsvorrichtung auf einfache Weise versetzt werden kann, um einen maximalen Schwenkwinkel eines Drehgelenks des Roboterarms auf sichere und schnelle Weise ändern zu können.

Die Aufgabe der Erfindung wird gelöst durch einen Roboterarm, mit den Merkmalen des Anspruchs 1.

Roboter, insbesondere Industrieroboter sind Arbeitsmaschinen, die zur automatischen Handhabung und/oder Bearbeitung von Objekten mit Werkzeugen ausgerüstet werden können und mittels ihrer Gelenke in mehreren Bewegungsachsen beispielsweise hinsichtlich Orientierung, Position und Arbeitsablauf programmierbar sind. Roboter weisen üblicherweise einen Roboterarm mit mehreren durch insbesondere elektrische Antriebe automatisch oder manuell verstellbare Gelenke (Achsen) und eine programmierbare Robotersteuerung auf, die während des Betriebs die Bewegungsabläufe des Roboters steuert bzw. regelt.

Der Roboter kann ein sogenannter Knickarmroboter sein, dessen Roboterarm ein Grundgestell als ein Glied aufweist, an dem ein Karussell als folgendes Glied um eine vertikale Achse drehbar gelagert und mittels eines ersten Antriebsmotors drehangetrieben ist. An dem Karussell kann eine Schwinge als weiteres Glied um eine zweite horizontale Achse auf und ab schwenkbar gelagert und mittels eines zweiten Antriebsmotors drehangetrieben sein. Die Schwinge trägt einen Armausleger, der um eine dritte horizontale Achse auf und ab schwenkbar gelagert und mittels eines dritten Antriebsmotors drehangetrieben ist. An dem Armausleger, dessen Grundarm ein weiteres Glied bildet, kann eine vierte Achse vorgesehen sein, welche in Längserstreckung des Armauslegers verläuft und über einen vierten Antriebsmotors eine Roboterhand, die einen Vorderarm des Armauslegers bildet und ein weiteres Glied darstellt, drehantreibt ist. Von der Roboterhand können sich ein erster Schenkel und ein zweiter Schenkel gabelförmig nach vorne erstrecken. Die beiden Schenkel tragen eine Lagerung für ein freies Ende der Roboterhand, das ein vorletztes Glied bildet. Die Lagerung definiert eine fünfte Achse des Roboterarms, um welche die Roboterhand mittels eines fünften Antriebsmotors schwenkbar bewegt werden kann. Ergänzend kann die Roboterhand eine sechste Achse aufweisen, um einen Werkzeugbefestigungsflansch, der ein letztes Glied bildet, mittels eines sechsten Antriebsmotors drehbar antreiben zu können.

Jedes der Gelenke kann als ein Drehgelenk ausgebildet sein. Jedes Glied ist ausgebildet, Kräfte und Momente, welche insbesondere von einem Greifer oder Werkzeug, das durch den Roboter gehandhabt, insbesondere bewegt wird, über einen Werkzeugbefestigungsflansch des Roboterarms in den Roboterarm, d.h. in seine Struktur eingeleitet wird, von einem Gelenk an ein folgendes Gelenk weiterzuleiten. Daneben müssen auch Kräfte und Momente, welche von der Eigengewichtskraft des Roboterarms stammen, in das Grundgestell des Roboterarms weitergeleitet werden. Jedes Glied des Roboterarms weist dazu mindestens ein Strukturteil auf, das ausgebildet ist, diese Kräfte und Momente aufnehmen und weiterleiten zu können. Im Allgemeinen ist ein solches Strukturteil hohl ausgebildet und kann beispielsweise von einem Metallgussteil oder einer geschweißten Stahlkonstruktion bestehen, welche beispielsweise Rohrabschnitte aufweisen kann. Jedes Glied ist über eines der Gelenke mit einem unmittelbar folgenden Glied des Roboterarms verbunden, insbesondere drehbar verbunden. Dazu kann das jeweilige Gelenk ein Drehlager aufweisen. An jedes Gelenk bzw. jedes Drehlager kann ein eigener Motor, wie beispielsweise ein Elektromotor, insbesondere ein Servomotor, mit zughöriger Antriebssteuerung automatisch antreibbar angekoppelt sein. Die Antriebe werden im Allgemeinen von einer Robotersteuerung des Roboters angesteuert. Durch die Robotersteuerung können die Gelenke mittels der Antriebe gemäß eines Roboterprogramms automatisiert oder in einem Handfahrbetrieb des Roboters antriebsgesteuert verstell werden, um die Konfiguration des Roboterarms zu verändern. Unter einer Konfiguration wird die Menge der momentanen, einzelnen Achswinkelstellungen der Gelenke des Roboterarms verstanden.

Die mechanische Anschlagsvorrichtung begrenzt den maximalen Schwenkwinkel eines zugeordneten Gelenks des Roboterarms unabhängig von der automatischen und/oder programmierten Ansteuerung des Roboterarms durch die Robotersteuerung. Die mechanische Anschlagsvorrichtung bildet insoweit eine mechanische Sicherungsvorrichtung. Die mechanische Anschlagsvorrichtung kann generell an einem beliebigen Gelenk oder an mehreren Gelenken des Roboterarms ausgebildet sein. Die mechanische Anschlagsvorrichtung kann insbesondere an einem Grundgelenk des Roboterarms ausgebildet sein, insbesondere an einem das Grundgestell des Roboterarms mit einem Karussell des Roboterarms verbindenden Gelenk.

Die mechanische Anschlagsvorrichtung kann in einer ersten Drehrichtung des die mechanische Anschlagsvorrichtung aufweisenden Gelenks des Roboterarms wirkende erste Anschlagstellung aufweisen und eine in einer entgegengesetzten Drehrichtung wirkende zweite Anschlagstellung aufweisen. Dabei kann der Anschlagsvorsprung zwei gegenüberliegende, voneinander wegweisende Anschlagsseiten aufweisen, derart, dass in der ersten Anschlagstellung die eine Anschlagsseite des Anschlagsvorsprungs an einem ersten Anschlagkörper der mechanischen Anschlagsvorrichtung ansteht, wenn der maximale Schwenkwinkel in Drehrichtung erreicht ist, und dass in der zweiten Anschlagstellung die andere Anschlagsseite des Anschlagsvorsprungs an einem zweiten Anschlagkörper der mechanischen Anschlagsvorrichtung ansteht, wenn der maximale Schwenkwinkel in entgegengesetzter Drehrichtung erreicht ist. Durch Umstecken des ersten Anschlagkörpers kann der maximale Schwenkwinkel in Drehrichtung verändert werden. Durch Umstecken des zweiten Anschlagkörpers kann der maximale Schwenkwinkel in entgegengesetzter Drehrichtung verändert werden.

Indem der Gegenanschlagskörper eine Gestalt aufweist, die in Zusammenwirken mit jeweils einer korrespondierenden Gestalt der Aufnahme ausgebildet ist, den Gegenanschlagskörper, wenn er an einer der mehreren Aufnahmen eingesetzt ist, sowohl in der Umfangsrichtung, als auch in radialer Richtung bezüglich der Drehachse des Drehgelenks formschlüssig an der Aufnahme, in die er eingesetzt ist, festzuhalten, kann der jeweilige maximale Schwenkwinkel des betreffende Gelenks, das die mechanische Anschlagsvorrichtung aufweist, besonders bedienerfreundlich, auf einfache Weise schnell verändert bzw. eingestellt werden. Dies erleichtert die Montage und das Einrichten des Roboterarms an seinem Betriebsort.

Das Formschlussverbindungsprofil eines einzelnen Gegenanschlagskörpers und das einzelne Formschlussverbindungsgegenprofil der jeweiligen Aufnahme, in die der Gegenanschlagskörper einsetzbar ist, sind derart ausgebildet, dass allein aufgrund der Gestalt des Formschlussverbindungsprofils und der Gestalt des korrespondierenden Formschlussverbindungsgegenprofils der Gegenanschlagskörper in der eingesetzten Aufnahme von mehreren über einen Umfangsbogen verteilt angeordneter Aufnahmen des anderen Gliedes des Roboterarms sowohl in der Umfangsrichtung als auch in radialer Richtung bezüglich der Drehachse des Drehgelenks formschlüssig in der Aufnahme festgehalten ist. Ein solches formschlüssiges Festhalten kann aufgrund der jeweiligen Gestalt des Formschlussverbindungsprofils und des Formschlussverbindungsgegenprofils erfolgen, insbesondere ohne separate und/oder zusätzliche Befestigungsmittel. Ein einzelner Gegenanschlagskörper kann demgemäß ausschließlich aufgrund der Gestalt des Formschlussverbindungsprofils und der Gestalt des Formschlussverbindungsgegenprofils in einer einzelnen Aufnahme sowohl in der Umfangsrichtung als auch in radialer Richtung bezüglich der Drehachse des Drehgelenks formschlüssig in der Aufnahme festgehalten sein. Es kann insbesondere lediglich ein einziger Gegenanschlagskörper für jede Drehrichtung vorhanden sein, der wahlweise in eine einzige Aufnahme von mehreren Aufnahmen eingesetzt ist. Die jeweilige Aufnahme kann ausgebildet sein, in einem eingesetzten Zustand des Gegenanschlagskörpers, den Gegenanschlagskörper von mindestens drei Seiten des Gegenanschlagskörpers zu umfassen bzw. formschlüssig mechanisch zu kontaktieren.

Indem der Gegenanschlagskörper eine Gestalt aufweist, die in Zusammenwirken mit jeweils einer korrespondierenden Gestalt der Aufnahme ausgebildet ist, den Gegenanschlagskörper, wenn er an einer der mehreren Aufnahmen eingesetzt ist, sowohl in der Umfangsrichtung, als auch in radialer Richtung bezüglich der Drehachse des Drehgelenks formschlüssig an der Aufnahme, in die er eingesetzt ist, festzuhalten, kann der jeweils umzusetzende Gegenanschlagskörper durch einfaches Einstecken in axialer Richtung bezüglich der Drehachse des Gelenks, das die mechanische Anschlagsvorrichtung aufweist, in die Aufnahme eingesetzte oder an die Aufnahme angesetzt werden, und durch einfaches Herausziehen in axialer Richtung bezüglich der Drehachse des Gelenks, das die mechanische Anschlagsvorrichtung aufweist, aus der Aufnahme herausgenommen oder von der Aufnahme entfernt werden.

Der Gegenanschlagskörper weist ein sowohl in der Umfangsrichtung, als auch in radialer Richtung bezüglich der Drehachse des Drehgelenks formschlüssig wirkendes Formschlussverbindungsprofil auf und die Aufnahmen weisen dabei jeweils ein zum Formschlussverbindungsprofil des Gegenanschlagskörpers korrespondierendes Formschlussverbindungsgegenprofil auf.

Das Formschlussverbindungsprofil und das Formschlussverbindungsgegenprofil sind demgemäß ausgebildet, in einem Zusammengefügten Zustand flächenbündig aneinander zu liegen, so dass sich eine flächig formschlüssige Verbindung von Gegenanschlagskörper und Aufnahme einstellt.

Gemäß der Erfindung sind das Formschlussverbindungsprofil des Gegenanschlagskörpers und die Formschlussverbindungsgegenprofile der Aufnahmen Zusammenstecken in einer bezüglich der Drehachse des Drehgelenks axialen Richtung ausgebildet.

Die bedeutet, dass das Formschlussverbindungsprofil und das Formschlussverbindungsgegenprofile in einem axialen Querschnitt betrachtet, von einer Kurvenlinie gebildet wird, die einen in Umfangsrichtung und in radialer Richtung wirkenden Hinterschnitt bildet, wobei diese Kurvenlinie dann in axialer Richtung durch insbesondere senkrechter oder insbesondere schiefer geometrischer Extrusion zu einer räumlichen Profilfläche erweitert wird, um das Formschlussverbindungsprofil oder das Formschlussverbindungsgegenprofile zu bilden.

Das Formschlussverbindungsprofil und das Formschlussverbindungsgegenprofile können insoweit durch einen Teil einer Mantelfläche eines allgemeinen, geraden und/oder insbesondere senkrechten geometrischen Zylinders gebildet werden.

Jede Aufnahme kann von einer Aufnahmetasche gebildet werden, deren Innenwand das Formschlussverbindungsgegenprofil aufweist und der Gegenanschlagskörper kann dabei einen Vorsprung aufweisen, dessen Außenwand das Formschlussverbindungsprofil aufweist.

In dieser ersten Ausführungsform greifen der Gegenanschlagskörper und die ausgewählte Aufnahmetasche dadurch ineinander, dass der Vorsprung des Gegenanschlagskörpers in der Tasche der Aufnahme formschlüssig aufgenommen ist. Die Tasche der Aufnahme umgreift insoweit den Vorsprung des Gegenanschlagskörpers.

Das Formschlussverbindungsprofil und das korrespondierende Formschlussverbindungsgegenprofil können dabei in Art einer Schwalbenschwanzverbindung oder in Art einer Tannenbaumverbindung ausgebildet sein. Im Falle des vorliegenden Ausführungsbeispiels können das Formschlussverbindungsprofil und das korrespondierende Formschlussverbindungsgegenprofil alternativ auch in Art eines vereinfachten Schwalbenschwanzverbindungsprofils ausgebildet sein. Das Formschlussverbindungsgegenprofil kann insoweit in Art eines im Querschnitt T-förmigen Vorsprungs ausgebildet sein. Entscheidend bei der Gestalt von Formschlussverbindungsprofil und korrespondierendem Formschlussverbindungsgegenprofil ist lediglich, dass ein quer zur radialen Richtung, d.h. in Umfangsrichtung verbreiterter Kopfabschnitt des Vorsprungs über einen quer zur radialen Richtung, d.h. in Umfangsrichtung verschmälerten Verbindungsabschnitt des Vorsprungs mit einem Basiskörper des Gegenanschlagskörpers verbunden ist.

Jede Aufnahme kann von einem Vorsprung gebildet werden, dessen Außenwand das Formschlussverbindungsgegenprofil aufweist und der Gegenanschlagskörper kann dabei eine Aufnahmetasche aufweisen, deren Innenwand das Formschlussverbindungsprofil aufweist.

In dieser zweiten Ausführungsform greifen der Gegenanschlagskörper und die ausgewählte Aufnahme dadurch ineinander, dass der Vorsprung der Aufnahme in einer Tasche des Gegenanschlagskörpers formschlüssig aufgenommen ist. Die Tasche des Gegenanschlagskörpers umgreift insoweit den Vorsprung der ausgewählten Aufnahme.

Das Formschlussverbindungsprofil und das korrespondierende Formschlussverbindungsgegenprofil können dabei in Art einer Schwalbenschwanzverbindung oder in Art einer Tannenbaumverbindung ausgebildet sein. Im Falle des vorliegenden Ausführungsbeispiels können das Formschlussverbindungsprofil und das korrespondierende Formschlussverbindungsgegenprofil alternativ auch in Art eines vereinfachten Schwalbenschwanzverbindungsprofils ausgebildet sein. Das Formschlussverbindungsprofil und das korrespondierende Formschlussverbindungsgegenprofil können insoweit in Art eines im Querschnitt T-förmigen Vorsprungs ausgebildet sein. Entscheidend bei der Gestalt von Formschlussverbindungsprofil und korrespondierendem Formschlussverbindungsgegenprofil ist lediglich, dass ein quer zur radialen Richtung, d.h. in Umfangsrichtung verbreiterter Kopfabschnitt des Vorsprungs über einen quer zur radialen Richtung, d.h. in Umfangsrichtung verschmälerten Verbindungsabschnitt des Vorsprungs mit einem Basisring der Aufnahme bzw. eines mehrere Aufnahmen aufweisenden Tragbogens verbunden ist.

Das Formschlussverbindungsprofil und das korrespondierende Formschlussverbindungsgegenprofil können demgemäß also in Art einer Schwalbenschwanzverbindung oder einer Tannenbaumverbindung ausgebildet sein.

Die mehreren über einen Umfangsbogen verteilt angeordneten Aufnahmen oder Aufnahmetaschen können an einem von dem anderen Glied des Roboterarms, insbesondere von einem Grundgestell des Roboterarms, separaten Tragbogen ausgebildet sein und der Tragbogen kann dabei durch lösbare Befestigungsmittel an dem anderen Glied des Roboterarms befestigt sein.

Der Tragbogen kann die Form eines Teilkreisringes aufweisen. An einer innenseitigen Mantelwand des Tragbogens sind dann die Aufnahmen oder Aufnahmetaschen ausgebildet. Dies bedeutet, dass die Aufnahmen oder Aufnahmetaschen von Vertiefungen bzw. Aushöhlungen an der innenseitigen Mantelwand des Tragbogens gebildet werden können. Jeweils ein Gegenanschlagskörper kann dabei in eine beliebige, d.h. zur Festlegung des maximalen Schwenkwinkels gewünschte Aufnahmetasche eingesetzt werden, derart, dass der Gegenanschlagskörper von der innenseitigen Mantelwand des Tragbogens weggerichtet nach Innen auf das Zentrum zu vorspringt.

Die lösbaren Befestigungsmittel können beispielsweise von an dem anderen Glied des Roboterarms, insbesondere an dem Grundgestell eingebrachten Gewindebohrungen, in den Tragbogen fluchtend eingebrachten Durchgangslöchern und diesen zugeordneten separaten Schrauben gebildet werden, durch welche Schrauben der Tragbogen lösbar an dem anderen Glied des Roboterarms, insbesondere an dem Grundgestell festgeschraubt werden kann.

Der Tragbogen kann sich zumindest im Wesentlichen über 270 Grad eines Kreisbogens erstrecken und insgesamt 16 oder 18 in gleichen Abständen voneinander und gleichmäßig über den Tragbogen hinweg verteilt angeordnete Aufnahmen oder Aufnahmetaschen aufweisen.

Indem der Tragbogen, der sich zumindest im Wesentlichen über 270 Grad eines Kreisbogens erstreckt, beispielsweise 18 in gleichen Abständen voneinander und gleichmäßig über den Tragbogen hinweg verteilt angeordnete Aufnahmen oder Aufnahmetaschen aufweist, wird eine Winkelteilung von 15 Grad erreicht.

Wenn zusätzlich jeder Gegenanschlagskörper in axialer Richtung bezüglich der Drehachse des Drehgelenks sowohl in einer ersten Einbauorientierung in die jeweilige Aufnahme oder Aufnahmetasche einsetzbar ist, als auch in einer zweiten, zur ersten Einbauorientierung gewendeten Einbauorientierung in die jeweilige Aufnahme oder Aufnahmetasche einsetzbar ist, und der Gegenanschlagskörper eine erste Anschlagswand aufweist, die ausgebildet ist, in einer ersten Drehrichtung des Drehgelenks in einer ersten Anschlagstellung der Anschlagsvorrichtung an dem Anschlagsvorsprung anzustehen und eine der ersten Anschlagswand gegenüberliegende zweite Anschlagswand aufweist, die ausgebildet ist, in einer zur ersten Drehrichtung entgegengesetzten Drehrichtung des Drehgelenks in einer zweiten Anschlagstellung der Anschlagsvorrichtung an dem Anschlagsvorsprung anzustehen, wobei die erste Anschlagswand relativ zur Spiegelsymmetrieebene des Formschlussverbindungsprofils um einen ersten Versatzwinkel von beispielsweise 5 Grad in Umfangsrichtung versetzt am Gegenanschlagskörper angeordnet ist und der zweite Anschlagsvorsprung relativ zur Spiegelsymmetrieebene des Formschlussverbindungsprofils in einem zweiten Versatzwinkel von beispielsweise 10 Grad in Umfangsrichtung versetzt am Gegenanschlagskörper angeordnet ist, dann kann die Winkelteilung von 15 Grad auf eine Winkelteilung von 5 Grad reduziert werden.

Dazu kann für den Gegenanschlagskörper zunächst diejenige Aufnahme oder Aufnahmetasche zum Einsetzen ausgewählt werden, die dem benötigten oder gewünschten maximalen Schwenkwinkel am nächsten kommt, und dann kann gewählt werden, in welcher Einbauorientierung der Gegenanschlagskörper in die ausgewählte Aufnahme oder Aufnahmetasche eingesetzt wird, um wahlweise 5 Grad oder 10 Grad, je nach Einbauorientierung des Gegenanschlagskörpers, zusätzlich zur Winkelstellung der ausgewählten Aufnahme oder Aufnahmetasche hinzufügen zu können. So ergibt sich am Tragbogen eine Winkelteilung von 5 Grad.

Der Tragbogen, der sich zumindest im Wesentlichen über 270 Grad eines Kreisbogens erstreckt, kann statt den genannten 18 Aufnahmen oder Aufnahmetaschen beispielsweise auch nur 16 in gleichen Abständen voneinander und gleichmäßig über den Tragbogen hinweg verteilt angeordnete Aufnahmen oder Aufnahmetaschen aufweisen, ohne dass die Winkelteilung von 15 Grad verloren gehen würde, da in diesem Fall die Aufnahmen oder Aufnahmetaschen in denselben Abständen voneinander angeordnet sein können, wie bei der Teilung bei 18 Aufnahmen oder Aufnahmetaschen, wobei jedoch nur die beiden endseitigen Aufnahmen oder Aufnahmetaschen an dem Tragbogen weggelassen sind.

Die Anschlagvorrichtung kann einen separaten Abschlussdeckel aufweisen, der ausgebildet ist, die mehreren über einen Umfangsbogen verteilt angeordneten Aufnahmen oder Aufnahmetaschen, und/oder den Tragbogen, welcher die mehreren über einen Umfangsbogen verteilt angeordneten Aufnahmen oder Aufnahmetaschen aufweist, von einer axialen Stirnseite her zu verschließen, wenn der Abschlussdeckel an dem anderen Glied des Roboterarms oder an dem Tragbogen lösbar befestigt ist.

Aufgrund der Funktion, dass die Gegenanschlagskörper in axialer Richtung in die Aufnahmen oder Aufnahmetaschen einsetzbar sein sollen, bedarf es zusätzlich zu der Form von Formschlussverbindungsprofil und Formschlussverbindungsgegenprofil noch einer axialen Festlegung, um die Gegenanschlagskörper in allen drei Raumrichtungen zu fixieren. An einer Unterseite bzw. an einer in axialer Richtung dem zugeordneten Glied des Roboterarms zuweisenden Stirnseite können die Aufnahmen oder Aufnahmetaschen von einem Boden oder von einer Außenwand des zugeordneten Glieds begrenzt sein, wobei ein axiales Einsetzen und axiales Herausnehmen des jeweiligen Gegenanschlagskörpers von der anderen axialen Stirnseite her erfolgt. Diese zum axialen Einsetzen und axialen Herausnehmen an sich axial offene Stirnseite wird durch den separaten Abschlussdeckel verschlossen, wenn die Gegenanschlagskörper in den gewünschten Aufnahmen oder Aufnahmetaschen eingesetzt sind. Mittels des angerachten, insbesondere angeschraubten Abschlussdeckels sind die eingesetzten Gegenanschlagskörper abschließend in allen Raumrichtungen vollständig fixiert. Jede Aufnahme oder Aufnahmetasche kann zwar von einem eigenen Deckel verschlossen sein. Allerdings ist es günstiger, weil weniger aufwändig für die Montage, einen einzigen gemeinsamen Abschlussdeckel für mehrere Aufnahme oder Aufnahmetasche, insbesondere für alle vorhandenen Aufnahme oder Aufnahmetasche vorzusehen.

Das Formschlussverbindungsprofil des Gegenanschlagskörpers kann spiegelsymmetrisch ausgebildet sein, derart, dass der Gegenanschlagskörper in axialer Richtung bezüglich der Drehachse des Drehgelenks sowohl in einer ersten Einbauorientierung in die jeweilige Aufnahme oder Aufnahmetasche einsetzbar ist als auch in einer zweiten, zur ersten Einbauorientierung gewendeten Einbauorientierung in die jeweilige Aufnahme oder Aufnahmetasche einsetzbar ist.

So kann für den derart wendbaren Gegenanschlagskörper zunächst diejenige Aufnahme oder Aufnahmetasche zum Einsetzen ausgewählt werden, die dem benötigten oder gewünschten maximalen Schwenkwinkel am nächsten kommt, und dann kann gewählt werden, in welcher Einbauorientierung der Gegenanschlagskörper in die ausgewählte Aufnahme oder Aufnahmetasche eingesetzt wird, um beispielsweise 5 Grad oder 10 Grad, je nach Einbauorientierung des Gegenanschlagskörpers, zusätzlich zur Winkelstellung der ausgewählten Aufnahme oder Aufnahmetasche hinzufügen zu können. So ergibt sich am Tragbogen eine entsprechend feiner unterteilte Winkelteilung.

Der Gegenanschlagskörper kann eine erste Anschlagswand aufweisen, die ausgebildet ist, in einer ersten Drehrichtung des Drehgelenks in einer ersten Anschlagstellung der Anschlagsvorrichtung an dem Anschlagsvorsprung anzustehen und kann eine der ersten Anschlagswand gegenüberliegende zweite Anschlagswand aufweisen, die ausgebildet ist, in einer zur ersten Drehrichtung entgegengesetzten Drehrichtung des Drehgelenks in einer zweiten Anschlagstellung der Anschlagsvorrichtung an dem Anschlagsvorsprung anzustehen, wobei die erste Anschlagswand relativ zur Spiegelsymmetrieebene des Formschlussverbindungsprofils um einen ersten Versatzwinkel in Umfangsrichtung versetzt am Gegenanschlagskörper angeordnet ist und der zweite Anschlagsvorsprung relativ zur Spiegelsymmetrieebene des Formschlussverbindungsprofils in einem zweiten Versatzwinkel, dessen Betrag von dem Betrag des ersten Versatzwinkels abweicht, in Umfangsrichtung versetzt am Gegenanschlagskörper angeordnet ist.

Der zweite Versatzwinkel der zweiten Anschlagswand kann in seinem Betrag doppelt so groß sein, wie der Betrag des ersten Versatzwinkels der ersten Anschlagswand.

Das dem Drehgelenk vorgelagerte Glied kann ein Grundgestell des Roboterarms sein und das dem Drehgelenk nachgelagerte Glied kann dabei ein Karussell des Roboterarms sein.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in anderen als den dargestellten Kombinationen betrachtet, allgemeine Merkmale der Erfindung darstellen.

Es zeigen:
- Fig. 1: eine perspektivische Teilansicht eines beispielhaften Roboterarms, der eine erfindungsgemäße mechanische Anschlagsvorrichtung an seinem ersten Drehgelenk aufweist, welches ein Grundgestell des Roboterarms mit einem Karussell des Roboterarms drehbar verbindet,
- Fig. 2: eine perspektivische Teilansicht des Roboterarms gemäß Fig. 1 bei dem ein separater Abschlussdeckel der erfindungsgemäßen, mechanischen Anschlagsvorrichtung abgenommen ist, so dass die mehreren Aufnahmen der Anschlagsvorrichtung zugänglich sind,
- Fig. 3: eine schematische Draufsicht auf die mehreren Aufnahmen der Anschlagsvorrichtung an dem Grundgestell des Roboterarms,
- Fig. 4: eine perspektivische Darstellung eines Tragbogens, der die mehreren Aufnahmen oder Aufnahmetaschen der Anschlagsvorrichtung aufweist mit zwei eingesetzten Gegenanschlagskörpern und einem angebrachten Abschlussdeckel,
- Fig. 5: eine perspektivische Darstellung eines Tragbogens, der die mehreren Aufnahmen oder Aufnahmetaschen der Anschlagsvorrichtung aufweist mit zwei eingesetzten Gegenanschlagskörpern, bei abgenommenem Abschlussdeckel,
- Fig. 6: eine schematische Draufsicht auf den Tragbogen, der die mehreren Aufnahmen oder Aufnahmetaschen der Anschlagsvorrichtung aufweist und in den zwei spiegelsymmetrisch ausgebildete Gegenanschlagskörper eingesetzt sind,
- Fig. 7: eine perspektivische Darstellung eines einzelnen Gegenanschlagskörpers in einer einsetzbaren ersten Orientierung, und
- Fig. 8: eine perspektivische Darstellung eines einzelnen Gegenanschlagskörpers in einer einsetzbaren zweiten Orientierung, in welcher der Gegenanschlagskörper gegenüber seiner Orientierung gemäß Fig. 7 gewendet ist.

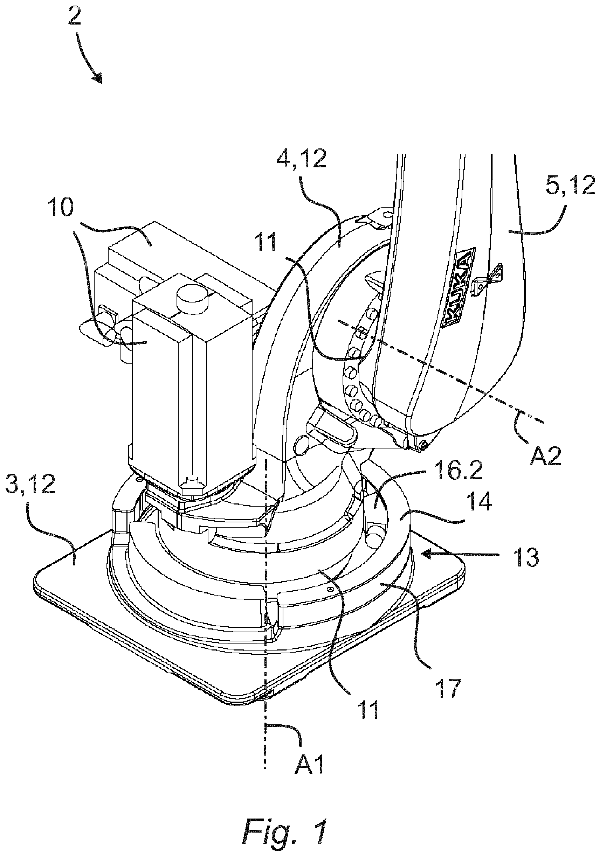

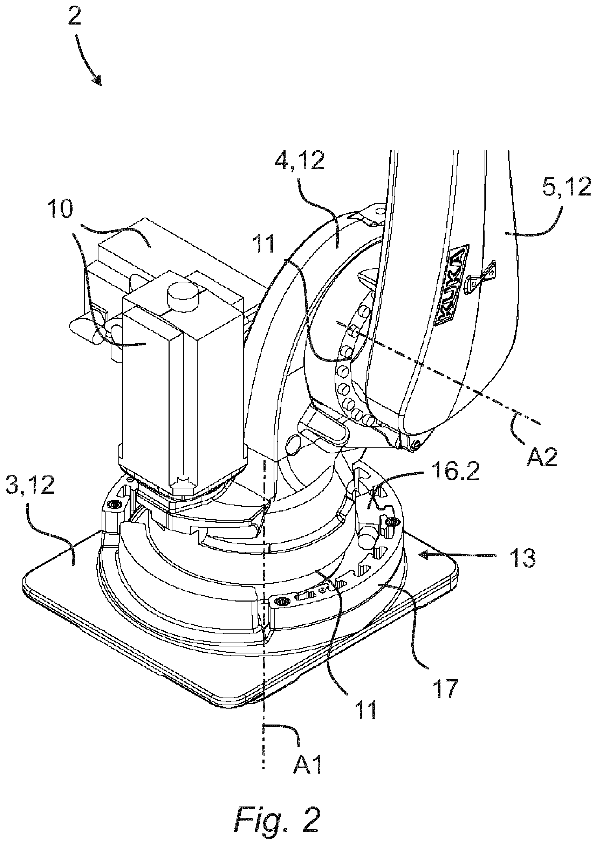

Die Fig. 1 und Fig. 2 zeigt einen Teil eines Roboterarms 2. Der Roboterarm 2 umfasst im Falle des vorliegenden Ausführungsbeispiels mehrere, nacheinander angeordnete und mittels Gelenke 11 verbundene Glieder 12. Bei den Gliedern 12 handelt es sich insbesondere um ein Grundgestell 3 und ein relativ zum Grundgestell 3 um eine vertikal verlaufende Achse A1 drehbar gelagertes Karussell 4. Weitere Glieder 12 des Roboterarms 2 sind im Falle des vorliegenden Ausführungsbeispiels eine Schwinge 5 und andere nicht gezeigte Glieder, die beispielsweise ein Armausleger und eine vorzugsweise mehrachsige Roboterhand mit einer als Flansch ausgeführten Befestigungsvorrichtung zum Befestigen eines Endeffektors, d.h. Werkzeugs sein können. Die Schwinge 5 ist am unteren Ende auf dem Karussell 4 um eine vorzugsweise horizontale Drehachse A2 schwenkbar gelagert.

Der Roboter 1 weist demgemäß eine Robotersteuerung und den Roboterarm 2 mit mehreren durch die Glieder 12 verbundenen Gelenken 11 auf, die von Motoren 10 des Roboterarms 2, welche an die Gelenke 11 angekoppelt sind, gemäß eines von der Robotersteuerung ausgeführten Roboterprogramms automatisiert oder in einem Handfahrbetrieb des Roboters antriebsgesteuert verstellbar sind, um die Konfiguration des Roboterarms 2 zu verändern.

Zur mechanischen Begrenzung eines maximalen Schwenkwinkels des Karussells 4 relativ zum Grundgestell 3 weist der Roboterarm 2 eine erfindungsgemäße mechanische Anschlagsvorrichtung 13 auf.

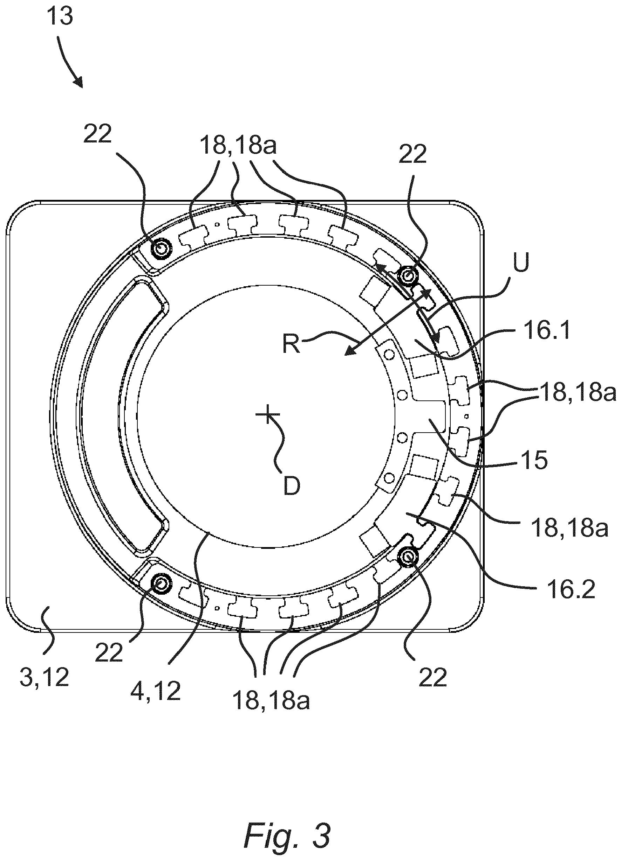

Die Fig. 2 und Fig. 3 zeigen bei abgenommenem Abschlussdeckel 14 den inneren Aufbau der mechanischen Anschlagsvorrichtung 13.

Die mechanische Anschlagsvorrichtung 13 des Roboterarms 2 weist im Falle des vorliegenden Ausführungsbeispiels einen mit dem Karussell 4 verbundenen Anschlagsvorsprung 15, einen in einer ersten Anschlagstellung in der einen Drehrichtung an dem Anschlagsvorsprung 15 anstehenden ersten Gegenanschlagskörper 16.1 und einen in einer zweiten Anschlagstellung in der anderen Drehrichtung an dem Anschlagsvorsprung 15 anstehenden zweiten Gegenanschlagskörper 16.2 auf. Jeder der beiden Gegenanschlagskörper 16.1 und 16.2 ist in Umfangsrichtung mit dem Grundgestell 3 formschlüssig verbunden, indem der jeweilige Gegenanschlagskörper 16.1 und 16.2 an einer von mehreren über einen Umfangsbogen eines Tragbogens 17 verteilt angeordneten Aufnahmen 18 des Grundgestells 3 eingesetzt ist.

Der jeweilige Gegenanschlagskörper 16.1 und 16.2 weist dabei eine Gestalt auf, die in Zusammenwirken mit jeweils einer korrespondierenden Gestalt der Aufnahme 18 ausgebildet ist, den Gegenanschlagskörper 16.1 und 16.2, wenn er an einer der mehreren Aufnahmen 18 eingesetzt ist, sowohl in der Umfangsrichtung U, als auch in radialer Richtung R bezüglich der Drehachse D des Drehgelenks formschlüssig an der Aufnahme 18, in die er eingesetzt ist, festzuhalten.

Der jeweilige Gegenanschlagskörper 16.1 und 16.2 weist ein sowohl in der Umfangsrichtung U, als auch in radialer Richtung R bezüglich der Drehachse D des Drehgelenks formschlüssig wirkendes Formschlussverbindungsprofil auf und die Aufnahmen 18 weisen jeweils ein zum Formschlussverbindungsprofil des Gegenanschlagskörpers 16.1 und 16.2 korrespondierendes Formschlussverbindungsgegenprofil auf.

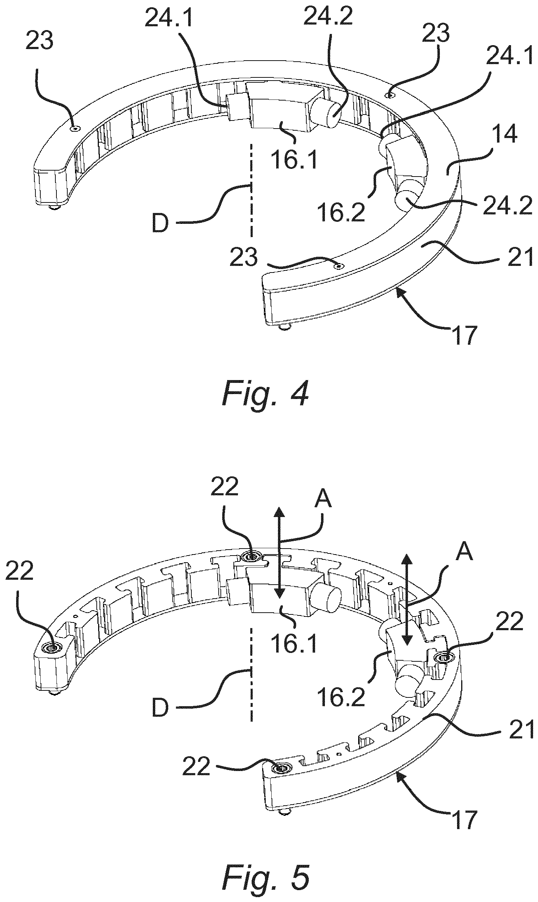

Das Formschlussverbindungsprofil des Gegenanschlagskörpers 16.1 und 16.2 und die Formschlussverbindungsgegenprofile der Aufnahmen 18 sind zum Zusammenstecken in einer bezüglich der Drehachse D des Drehgelenks axialen Richtung A ausgebildet, wie dies insbesondere in Fig. 5 veranschaulicht ist, wenn der Abschlussdeckel 14 entfernt ist.

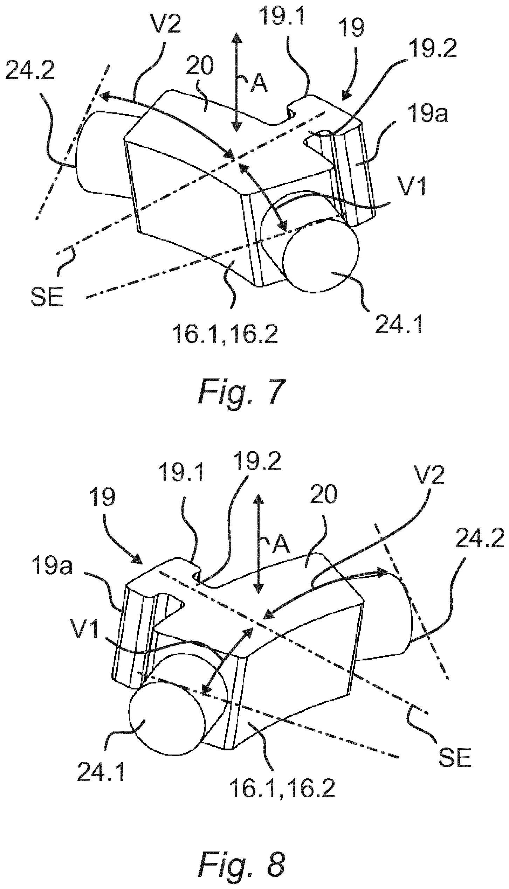

Jede Aufnahme 18 wird im Falle des vorliegenden Ausführungsbeispiels von einer Aufnahmetasche 18a gebildet, deren Innenwand das Formschlussverbindungsgegenprofil aufweist und der Gegenanschlagskörper 16.1 und 16.2 weist dabei einen Vorsprung 19 auf, dessen Außenwand 19a das Formschlussverbindungsprofil aufweist, wie dies insbesondere in Fig. 7 und Fig. 8 zu sehen ist.

Das Formschlussverbindungsprofil und das korrespondierende Formschlussverbindungsgegenprofil können in Art einer Schwalbenschwanzverbindung oder in Art einer Tannenbaumverbindung ausgebildet sein. Im Falle des vorliegenden Ausführungsbeispiels sind das Formschlussverbindungsprofil und das korrespondierende Formschlussverbindungsgegenprofil in Art eines vereinfachten Schwalbenschwanzverbindungsprofils ausgebildet. Im Falle des vorliegenden Ausführungsbeispiels sind das Formschlussverbindungsprofil und das korrespondierende Formschlussverbindungsgegenprofil in Art eines im Querschnitt T-förmigen Vorsprungs 19 ausgebildet. Entscheidend bei der Gestalt von Formschlussverbindungsprofil und korrespondierendem Formschlussverbindungsgegenprofil ist lediglich, dass ein quer zur radialen Richtung R, d.h. in Umfangsrichtung U verbreiterter Kopfabschnitt 19.1 des Vorsprungs 19 über einen quer zur radialen Richtung R, d.h. in Umfangsrichtung U verschmälerten Verbindungsabschnitt 19.2 des Vorsprungs 19 mit einem Basiskörper 20 des Gegenanschlagskörpers 16.1 und 16.2 bzw. mit einem Basisring 21 des Tragbogens 17 verbunden ist.

Im Falle des vorliegenden Ausführungsbeispiels sind die mehreren über einen Umfangsbogen verteilt angeordneten Aufnahmen 18 oder Aufnahmetaschen 18a an einem von dem Grundgestell 3 des Roboterarms 2 separaten Tragbogen 17 ausgebildet und der Tragbogen 17 ist durch lösbare Befestigungsmittel 22 an dem Grundgestell 3 des Roboterarms 2 befestigt. Die lösbaren Befestigungsmittel 22 können beispielsweise von in dem Grundgestell 3 eingebrachten Gewindebohrungen, in den Tragbogen 17 fluchtend eingebrachten Durchgangslöchern und diesen zugeordneten separaten Schrauben gebildet werden, durch welche Schrauben der Tragbogen 17 lösbar an dem Grundgestell 3 festgeschraubt werden kann.

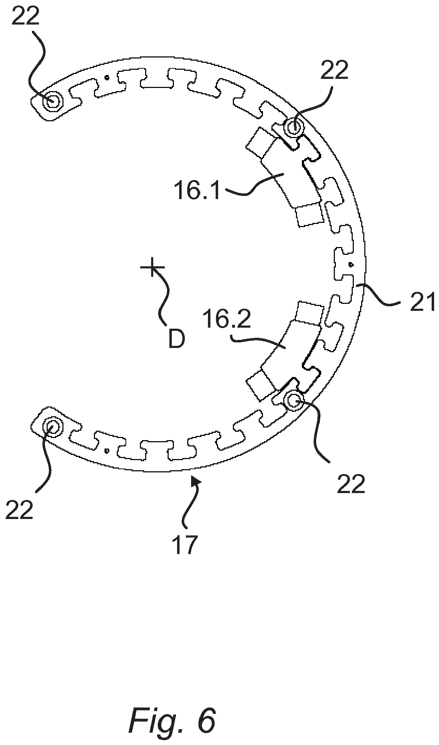

Insbesondere die Fig. 6 zeigt, wie der Tragbogen 17 sich zumindest im Wesentlichen über 270 Grad eines Kreisbogens erstreckt und im Falle des vorliegenden Ausführungsbeispiels insgesamt 14 in gleichen Abständen voneinander und gleichmäßig über den Tragbogen 17 hinweg verteilt angeordnete Aufnahmen 18 oder Aufnahmetaschen 18a aufweist.

Der separate Abschlussdeckel 14 ist ausgebildet, die mehreren über einen Umfangsbogen verteilt angeordneten Aufnahmen 18 oder Aufnahmetaschen 18a, d.h. den Tragbogen 17, welcher die mehreren über einen Umfangsbogen verteilt angeordneten Aufnahmen 18 oder Aufnahmetaschen 18a aufweist, von einer axialen Stirnseite her zu verschließen, wenn der Abschlussdeckel 14, wie insbesondere in Fig. 4 gezeigt, an dem Tragbogen 17 mittels zusätzlicher Befestigungsmittel 23 lösbar befestigt ist. Die lösbaren Befestigungsmittel 23 können beispielsweise von in dem Tragbogen 17 eingebrachten Gewindebohrungen, in den Abschlussdeckel 14 fluchtend eingebrachte Durchgangslöcher und diesen zugeordnete separate Schrauben gebildet werden, durch welche Schrauben der Abschlussdeckel 14 lösbar an dem Tragbogen 17 festgeschraubt werden kann.

Die Fig. 7 und die Fig. 8 veranschaulichen, wie das Formschlussverbindungsprofil des Gegenanschlagskörpers 16.1 und 16.2 spiegelsymmetrisch ausgebildet ist, derart, dass der Gegenanschlagskörper 16.1, 16.2 in axialer Richtung A bezüglich der Drehachse D des Drehgelenks sowohl in einer ersten Einbauorientierung (Fig. 7) in die jeweilige Aufnahme 18 oder Aufnahmetasche 18a einsetzbar ist, als auch in einer zweiten, zur ersten Einbauorientierung (Fig. 7) gewendeten Einbauorientierung (Fig. 8) in die jeweilige Aufnahme 18 oder Aufnahmetasche 18a einsetzbar ist. So zeigt beispielsweise die Fig. 5 zwei identisch ausgebildete Gegenanschlagskörper 16.1 und 16.2, wobei der in Fig. 5 bei etwa einer Zwölfuhr-Position zu sehende Gegenanschlagskörper 16.1 in einer Orientierung gemäß Fig. 8 in eine der Aufnahme 18 oder Aufnahmetasche 18a eingesetzt ist und der in Fig. 5 bei etwa einer Dreiuhr-Position zu sehende Gegenanschlagskörper 16.2 in einer gewendeten Orientierung gemäß Fig. 7 in eine der Aufnahme 18 oder Aufnahmetasche 18a eingesetzt ist.

Besonders die Fig. 7 zeigt im Vergleich mit der Fig. 8 deutlich, wie der Gegenanschlagskörper 16.1 und 16.2 eine erste Anschlagswand 24.1 aufweist, die ausgebildet ist, in einer ersten Drehrichtung des Drehgelenks in einer ersten Anschlagstellung der Anschlagsvorrichtung 13 an dem Anschlagsvorsprung 15 anzustehen und eine der ersten Anschlagswand 24.1 gegenüberliegende zweite Anschlagswand 24.2 aufweist, die ausgebildet ist, in einer zur ersten Drehrichtung entgegengesetzten Drehrichtung des Drehgelenks in einer zweiten Anschlagstellung der Anschlagsvorrichtung 13 an dem Anschlagsvorsprung 15 anzustehen, wobei die erste Anschlagswand 24.1 relativ zur Spiegelsymmetrieebene SE des Formschlussverbindungsprofils um einen ersten Versatzwinkel V1 in Umfangsrichtung versetzt am Gegenanschlagskörper 16.1 und 16.2 angeordnet ist und der zweite Anschlagsvorsprung 24.2 relativ zur Spiegelsymmetrieebene SE des Formschlussverbindungsprofils in einem zweiten Versatzwinkel V2, dessen Betrag von dem Betrag des ersten Versatzwinkels V1 abweicht, in Umfangsrichtung versetzt am Gegenanschlagskörper 16.1 und 16.2 angeordnet ist.

Im Falle des vorliegenden Ausführungsbeispiels ist der zweite Versatzwinkel V2 der zweiten Anschlagswand 24.2 in seinem Betrag doppelt so groß ist, wie der Betrag des ersten Versatzwinkels V1 der ersten Anschlagswand 24.1.

Der Tragbogen 17 kann sich auch über Winkel bis etwa 360 Grad erstrecken. Für den Fall, dass der Anschlagsvorsprung 15 Teil eines schleppenden Anschlags ist, können sogar Winkel größer als 360 Grad, insbesondere bis etwa 370 Grad oder bis etwa 380 Grad erreicht werden. Es versteht sich, dass die Konfiguration eine nahezu beliebige Begrenzung des Winkels des Tragbogens 17 von etwa 10 Grad bis etwa 360 Grad ermöglicht.

## Patentansprüche

1. Roboterarm, aufweisend mehrere Glieder (12) und mehrere, die Glieder (12) gegeneinander verstellbar verbindende Gelenke (11), von denen wenigstens eines der Gelenke (11) als ein Drehgelenk ausgebildet ist, das ein dem Drehgelenk zugeordnetes, unmittelbar vorgelagertes Glied der Glieder (12) mit einem dem Drehgelenk zugeordneten, unmittelbar nachgelagerten zweiten Glied der Glieder (12) gegeneinander verschwenkbar verbindet, wobei das Drehgelenk mittels eines Motors (10) des Roboterarms (2) automatisch verstellbar und in seinem maximalen Schwenkwinkel durch eine mechanische Anschlagsvorrichtung (13) des Roboterarms (2) begrenzt ist, die wenigstens einen mit dem einen Glied (4, 12) der beiden dem Drehgelenk zugeordneten Glieder (12) verbundenen Anschlagsvorsprung (15) und wenigstens einen in einer Anschlagstellung an dem Anschlagsvorsprung (15) anstehenden Gegenanschlagskörper (16.1, 16.2) aufweist, der mit dem anderen Glied (3, 12) der beiden dem Drehgelenk zugeordneten Glieder (12) in Umfangsrichtung bezüglich der Drehachse (D) des Drehgelenks formschlüssig verbunden ist, indem der Gegenanschlagskörper (16.1, 16.2) an einer von mehreren über einen Umfangsbogen verteilt angeordneten Aufnahmen (18) des anderen Gliedes (3, 12) angesetzt ist, wobei der Gegenanschlagskörper (16.1, 16.2) eine Gestalt aufweist, die in Zusammenwirken mit jeweils einer korrespondierenden Gestalt der Aufnahme (18) ausgebildet ist, den Gegenanschlagskörper (16.1, 16.2), wenn er an einer der mehreren Aufnahmen (18) eingesetzt ist, sowohl in der Umfangsrichtung, als auch in radialer Richtung bezüglich der Drehachse (D) des Drehgelenks formschlüssig an der Aufnahme (18), in die er eingesetzt ist, festzuhalten, wobei der Gegenanschlagskörper (16.1, 16.2) ein sowohl in der Umfangsrichtung, als auch in radialer Richtung bezüglich der Drehachse (D) des Drehgelenks formschlüssig wirkendes Formschlussverbindungsprofil aufweist und die Aufnahmen (18) jeweils ein zum Formschlussverbindungsprofil des Gegenanschlagskörpers (16.1, 16.2) korrespondierendes Formschlussverbindungsgegenprofil aufweisen, **dadurch gekennzeichnet, dass** das Formschlussverbindungsprofil des Gegenanschlagskörpers (16.1, 16.2) und die Formschlussverbindungsgegenprofile der Aufnahmen (18) zum Zusammenstecken in einer bezüglich der Drehachse (D) des Drehgelenks axialen Richtung (A) ausgebildet sind.

2. Roboterarm nach Anspruch 1, **dadurch gekennzeichnet, dass** jede Aufnahme (18) von einer Aufnahmetasche (18a) gebildet wird, deren Innenwand das Formschlussverbindungsgegenprofil aufweist und der Gegenanschlagskörper (16.1, 16.2) einen Vorsprung (19) aufweist, dessen Außenwand (19a) das Formschlussverbindungsprofil aufweist.

3. Roboterarm nach Anspruch 1 oder 2, **dadurch gekennzeichnet, dass** jede Aufnahme (18) von einem Vorsprung gebildet wird, dessen Außenwand das Formschlussverbindungsgegenprofil aufweist und der Gegenanschlagskörper (16.1, 16.2) eine Aufnahmetasche aufweist, deren Innenwand das Formschlussverbindungsprofil aufweist.

4. Roboterarm nach einem der Ansprüche 1 bis 3, **dadurch gekennzeichnet, dass** das Formschlussverbindungsprofil und das korrespondierende Formschlussverbindungsgegenprofil in Art einer Schwalbenschwanzverbindung oder einer Tannenbaumverbindung ausgebildet sind.

5. Roboterarm nach einem der Ansprüche 1 bis 4, **dadurch gekennzeichnet, dass** die mehreren über einen Umfangsbogen verteilt angeordneten Aufnahmen (18) oder Aufnahmetaschen (18a) an einem von dem anderen Glied (3, 12) des Roboterarms (2) separaten Tragbogen (17) ausgebildet sind und der Tragbogen (17) durch lösbare Befestigungsmittel (22) an dem anderen Glied (3, 12) des Roboterarms (2) befestigt ist.

6. Roboterarm nach Anspruch 5, **dadurch gekennzeichnet, dass** der Tragbogen (17) sich zumindest im Wesentlichen über 270 Grad eines Kreisbogens erstreckt und insgesamt 16 oder 18 in gleichen Abständen voneinander und gleichmäßig über den Tragbogen (17) hinweg verteilt angeordnete Aufnahmen (18) oder Aufnahmetaschen (18a) aufweist.

7. Roboterarm nach einem der Ansprüche 1 bis 6, **dadurch gekennzeichnet, dass** die Anschlagvorrichtung (13) einen separaten Abschlussdeckel (14) aufweist, der ausgebildet ist, die mehreren über einen Umfangsbogen verteilt angeordneten Aufnahmen (18) oder Aufnahmetaschen (18a), und/oder den Tragbogen (17), welcher die mehreren über einen Umfangsbogen verteilt angeordneten Aufnahmen (18) oder Aufnahmetaschen (18a) aufweist, von einer axialen Stirnseite her zu verschließen, wenn der Abschlussdeckel (14) an dem anderen Glied (3, 12) des Roboterarms (2) oder an dem Tragbogen (17) lösbar befestigt ist.

8. Roboterarm nach einem der Ansprüche 1 bis 7, **dadurch gekennzeichnet, dass** das Formschlussverbindungsprofil des Gegenanschlagskörpers (16.1, 16.2) spiegelsymmetrisch ausgebildet ist, derart, dass der Gegenanschlagskörper (16.1, 16.2) in axialer Richtung (A) bezüglich der Drehachse (D) des Drehgelenks sowohl in einer ersten Einbauorientierung in die jeweilige Aufnahme (18) oder Aufnahmetasche (18a) einsetzbar ist, als auch in einer zweiten, zur ersten Einbauorientierung gewendeten Einbauorientierung in die jeweilige Aufnahme (18) oder Aufnahmetasche (18a) einsetzbar ist.

9. Roboterarm nach Anspruch 8, **dadurch gekennzeichnet, dass** der Gegenanschlagskörper (16.1, 16.2) eine erste Anschlagswand (24.1) aufweist, die ausgebildet ist, in einer ersten Drehrichtung des Drehgelenks in einer ersten Anschlagstellung der Anschlagsvorrichtung (13) an dem Anschlagsvorsprung (15) anzustehen und eine der ersten Anschlagswand (24.1) gegenüberliegende zweite Anschlagswand (24.2) aufweist, die ausgebildet ist, in einer zur ersten Drehrichtung entgegengesetzten Drehrichtung des Drehgelenks in einer zweiten Anschlagstellung der Anschlagsvorrichtung (13) an dem Anschlagsvorsprung (15) anzustehen, wobei die erste Anschlagswand (24.1) relativ zur Spiegelsymmetrieebene des Formschlussverbindungsprofils um einen ersten Versatzwinkel (V1) in Umfangsrichtung versetzt am Gegenanschlagskörper (16.1, 16.2) angeordnet ist und der zweite Anschlagsvorsprung (24.2) relativ zur Spiegelsymmetrieebene des Formschlussverbindungsprofils in einem zweiten Versatzwinkel (V2), dessen Betrag von dem Betrag des ersten Versatzwinkels (V1) abweicht, in Umfangsrichtung versetzt am Gegenanschlagskörper (16.1, 16.2) angeordnet ist.

10. Roboterarm nach Anspruch 9, **dadurch gekennzeichnet, dass** der zweite Versatzwinkel (V2) der zweiten Anschlagswand (24.2) in seinem Betrag doppelt so groß ist, wie der Betrag des ersten Versatzwinkels (V1) der ersten Anschlagswand (24.1).

11. Roboterarm nach einem der Ansprüche 1 bis 10, **dadurch gekennzeichnet, dass** das dem Drehgelenk vorgelagerte Glied (12) ein Grundgestell (3) des Roboterarms (2) ist und das dem Drehgelenk nachgelagerte Glied (12) ein Karussell (4) des Roboterarms (2) ist.

## Claims

1. Robot arm, comprising several links (12) and several joints (11) connecting the links (12) so that they can be adjusted relative to one another, of which at least one of the joints (11) is designed as a swivel joint that is directly associated with the swivel joint The upstream link of the links (12) is connected to a second link of the links (12) directly downstream associated with the swivel joint in a pivotable manner, the swivel joint being automatically adjustable and at its maximum by means of a motor (10) of the robot arm (2) Pivoting angle is limited by a mechanical stop device (13) of the robot arm (2) which has at least one stop projection (15) connected to one link (4, 12) of the two links (12) associated with the swivel joint and at least one in a stop position on the stop projection (15) has adjacent counter-stop body (16.1, 16.2), which with the other link (3, 12) of the two links assigned to the rotary joint (12) is positively connected in the circumferential direction with respect to the axis of rotation (D) of the swivel joint in that the counter-stop body (16.1, 16.2) is attached to one of several receptacles (18) of the other link (3, 12) is attached, wherein the counter-stop body (16.1, 16.2) has a shape that is designed in cooperation with a corresponding shape of the receptacle (18), the counter-stop body (16.1, 16.2), if it is used on one of the multiple receptacles (18), both in the circumferential direction and in the radial direction with respect to the axis of rotation (D) of the swivel joint in a form-fitting manner on the receptacle (18) in which it is inserted, the counter-stop body (16.1, 16.2) has a form-locking connection profile which acts in a form-locking manner both in the circumferential direction and in the radial direction with respect to the axis of rotation (D) of the swivel joint, and the receptacles (18) each have a form-locking connection profile of the counter-stop body (16.1, 16.2) have a corresponding form-fit connection counter-profile, **characterized in that** the form-fit connection profile of the counter-stop body (16.1, 16.2) and the form-fit connection counter-profiles of the receptacles (18) for joining together in one with respect to the axis of rotation (D) of the Swivel joint axial direction (A) are formed.

2. Robot arm according to claim 1, **characterized in that** each receptacle (18) is formed by a receptacle pocket (18a), the inner wall of which has the form-fit connection counter-profile and the counter-stop body (16.1, 16.2) has a projection (19) whose Outer wall (19a) has the form-fit connection profile.

3. Robot arm according to claim 1 or 2, **characterized in that** each receptacle (18) is formed by a projection, the outer wall of which has the form-fit connection counter profile and the counter-stop body (16.1, 16.2) has a receiving pocket, the inner wall of which has the form-fit connection profile.

4. Robot arm according to one of claims 1 to 3, **characterized in that** the form-fit connection profile and the corresponding form-fit connection counter-profile are designed in the manner of a dovetail connection or a firtree connection.

5. Robot arm according to one of claims 1 to 4, **characterized in that** the plurality of receptacles (18) or receptacle pockets (18a) arranged distributed over a circumferential arc on one of the other members (3, 12) of the robot arm (2) separate support arches (17) are formed and the support arch (17) is attached to the other link (3, 12) of the robot arm (2) by releasable fastening means (22).

6. Robot arm according to claim 5, **characterized in that** the supporting arch (17) extends at least substantially over 270 degrees of a circular arc and a total of 16 or 18 receptacles (18) arranged at equal distances from one another and evenly distributed over the supporting arch (17). or receiving pockets (18a).

7. Robot arm according to one of claims 1 to 6, **characterized in that** the stop device (13) has a separate end cover (14) which is designed to accommodate the plurality of receptacles (18) or distributed over a circumferential arc Receiving pockets (18a) and / or the support arch (17), which has the multiple receptacles (18) or receiving pockets (18a) distributed over a circumferential arch, to be closed from an axial end when the end cover (14) is releasably attached to the other link (3, 12) of the robot arm (2) or to the support arch (17) .

8. Robot arm according to one of claims 1 to 7, **characterized in that** the form-fitting connection profile of the counter-stop body (16.1, 16.2) is mirror-symmetrical, such that the counter-stop body (16.1, 16.2) in the axial direction (A) with respect to the Rotation axis (D) of the swivel joint both in a first installation.

9. Robot arm according to claim 8, **characterized in that** the counter-stop body (16.1, 16.2) has a first stop wall (24.1) which is designed to abut the stop device (13) in a first direction of rotation of the rotary joint in a first stop position the stop projection (15) and has a second stop wall (24.2) opposite the first stop wall (24.1), which is designed to rotate in a direction of rotation of the rotary joint opposite to the first direction of rotation in a second stop position of the stop device 13) to stand against the stop projection (15), the first stop wall (24.1) being arranged on the counter-stop body (16.1, 16.2) offset relative to the mirror symmetry plane of the form-fit connection profile by a first offset angle (V1) in the circumferential direction, and the second stop projection (24.2) relative to the mirror symmetry plane of the form-fit connection profile in a second offset angle (V2), the Bet rag differs from the amount of the first offset angle (V1), is arranged offset in the circumferential direction on the counter-stop body (16.1, 16.2).

10. Robot arm according to claim 9, **characterized in that** the second offset angle (V2) of the second stop wall (24.2) is twice as large in its amount as the amount of the first offset angle (V1) of the first stop wall (24.1).

11. Robot arm according to one of claims 1 to 10, **characterized in that** the link (12) upstream of the swivel joint is a base frame (3) of the robot arm (2) and the link (12) located downstream of the swivel joint is a carousel (4) of the robot arm (2).

## Revendications

1. Bras de robot, comprenant plusieurs liaisons (12) et plusieurs articulations (11) reliant les liaisons (12) de manière à ce qu'elles puissent être réglées les unes par rapport aux autres, dont au moins l'une des articulations (11) est conçue comme un émerillon articulation directement associée à l'articulation pivotante La liaison amont des liaisons (12) est reliée à une seconde liaison des liaisons (12) directement en aval associées à l'articulation pivotante de manière pivotante, l'articulation pivotante étant auto- réglable et à son maximum au moyen d'un moteur (10) du bras de robot (2) L'angle de pivotement est limité par un dispositif d'arrêt mécanique (13) du bras de robot (2) qui présente au moins une saillie d'arrêt (15) relié à une bielle (4, 12) des deux biellettes (12) associées à l'articulation pivotante et au moins une en position d'arrêt sur la saillie d'arrêt (15) a un corps de contre-butée adjacent (16.1, 16.2), qui avec l'autre maillon (3, 12) des deux maillons affectés à l'articulation rotative (12) est reliée positivement dans le sens circonférentiel par rapport à l'axe de rotation (D) de l'articulation pivotante en ce que le corps de contre-butée (16.1, 16.2) est fixé à l'un de plusieurs réceptacles (18) de l'autre biellette (3, 12) est fixé , dans lequel le corps de contre-butée (16.1, 16.2) a une forme qui est conçue en coopération avec une forme correspondante du réceptacle (18), le corps de contre-butée (16.1, 16.2), s'il est utilisé sur l'un des réceptacles multiples (18), à la fois dans le sens circonférentiel et dans le sens radial par rapport à l'axe de rotation (D) de l'articulation pivotante, de manière à s'ajuster sur le réceptacle (18) dans lequel il se trouve inséré, le corps de contre-butée (16.1, 16.2) présente un profil de connexion à verrouillage de forme qui agit de manière à verrouillage de forme à la fois dans le sens circonférentiel et dans le sens radial par rapport à l'axe de rotation (D) du pivot joint, et les réceptacles (18) ont chacun un profil de connexion de verrouillage de forme du corps de contre-butée (16.1, 16.2) ont une forme-fi correspondante t contre-profil de connexion, **caractérisé en ce que** le profil de connexion à emboîtement du corps de contre-butée (16.1, 16.2) et les contre-profils de connexion à emboîtement des réceptacles (18) à assembler en un par rapport au l'axe de rotation (D) de la direction axiale de l'articulation pivotante (A) sont formés.

2. Bras de robot selon la revendication 1, **caractérisé en ce que** chaque réceptacle (18) est formé par une poche de réceptacle (18a), dont la paroi interne présente le contre-profil de connexion emboîté et le corps de contre-butée (16.1, 16.2) présente une saillie (19) dont la paroi extérieure (19a) a le profil de raccordement emboîté.

3. Bras de robot selon la revendication 1 ou 2, **caractérisé en ce que** chaque réceptacle (18) est formé par une saillie dont la paroi extérieure présente le contre-profil de connexion emboîté et le corps de contre-butée (16.1, 16.2) a une poche réceptrice dont la paroi intérieure a le profil de connexion moulé.

4. Bras de robot selon l'une des revendications 1 à 3, **caractérisé en ce que** le profilé de raccordement coffrage et le contre-profilé d'assemblage coffrage correspondant sont conçus à la manière d'un assemblage en queue d'aronde ou d'une con nection.

5. Bras de robot selon l'une des revendications 1 à 4, **caractérisé en ce que** la pluralité de réceptacles (18) ou poches de réceptacles (18a) disposés répartis sur un arc circonférentiel sur l'un des autres organes (3, 12) du bras de robot (2) des arceaux de support séparés (17) sont formés et l'arc de support (17) est fixé à l'autre lien (3, 12) du bras de robot (2) par des moyens de fixation amovibles (22).

6. Bras de robot selon la revendication 5, **caractérisé en ce que** l'arc de support (17) s'étend au moins sensiblement sur 270 degrés d'un arc de cercle et un total de 16 ou 18 réceptacles (18) disposés à égale distance d'un autre. er et uniformément répartie sur l'arc de support (17). ou recevant des poches (18a).

7. Bras de robot selon l'une des revendications 1 à 6, **caractérisé en ce que** le dispositif d'arrêt (13) présente un couvercle d'extrémité séparé (14) qui est conçu pour recevoir la pluralité de récepta-cles (18) ou répartis sur un arc circonférentiel. Les poches de réception (18a) et / ou l'arc de support (17), qui a les multiples réceptacles (18) ou poches de réception (18a) répartis sur un arc circonférentiel, à fermer à partir d'une extrémité axiale lorsque le couvercle d'extrémité (14) est attaché de manière reliable à l'autre lien (3, 12) du bras de robot (2) ou à l'arc de support (17).

8. Bras de robot selon l'une des revendications 1 à 7, **caractérisé en ce que** le profil de liaison emboîtable du corps de contre-butée (16.1, 16.2) est symétrique en miroir, de sorte que le corps de contre-butée (16.1, 16.2) dans la direction axiale (A) par rapport à l'axe de rotation (D) de l'articulation pivotante dans une première installation.

9. Bras de robot selon la revendication 8, **caractérisé en ce que** le corps de contre-butée (16.1, 16.2) présente une première paroi de butée (24.1) qui est destinée à venir en butée contre le dispositif d'arrêt (13) dans un premier sens de rotation de la rotative. joint dans une première position d'arrêt la saillie d'arrêt (15) et a une seconde paroi d'arrêt (24.2) opposée à la première paroi d'arrêt (24.1), qui est conçue pour tourner dans un sens de rotation du joint rotatif opposé au premier sens de rotation dans une deuxième position d'arrêt du dispositif d'arrêt 13) pour se tenir contre la saillie d'arrêt (15), la première paroi d'arrêt (24.1) étant disposée sur le corps de contre-butée (16.1, 16.2) décalée par rapport au plan de symétrie du miroir de le profil de connexion form-fit d'un premier angle de décalage (V1) dans la direction circonférentielle, et la seconde saillie d'arrêt (24.2) par rapport au plan de symétrie du miroir du profil de connexion form-fit dans un second angle de décalage (V2), le Le chiffon de pari diffère de la quantité du premier angle de décalage (V1), est disposé de fset dans la direction circonférentielle sur le corps de contre-butée (16.1, 16.2).

10. Bras de robot selon la revendication 9, **caractérisé en ce que** le deuxième angle de décalage (V2) de la deuxième paroi de butée (24.2) est deux fois plus grand dans sa valeur que la valeur du premier angle de décalage (V1) de la première paroi de butée. (24,1).

11. Bras de robot selon l'une des revendications 1 à 10, **caractérisé en ce que** le lien (12) en amont de l'articulation pivotante est un châssis de base (3) du bras du robot (2) et le lien (12) situé en aval du l'articulation pivotante est un carrousel (4) du bras du robot (2).
